(19) Europäisches Patentamt European Patent Office Office européen des brevets

(11) **EP 3 407 517 A1**

(12) **EUROPEAN PATENT APPLICATION**

(43) Date of publication:
**28.11.2018 Bulletin 2018/48**

(51) Int Cl.:
*H04L 1/00* (2006.01)  *H04L 1/18* (2006.01)
*H04L 29/08* (2006.01)  *H04L 12/40* (2006.01)

(21) Application number: **17172577.3**

(22) Date of filing: **23.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Ningbo Geely Automobile Research
& Development Co. Ltd.
Hangzhou Bay New District
Ningbo 315336 (CN)**

(72) Inventor: **PALANDER, Michael
433 66 SÄVEDALEN (SE)**

(74) Representative: **Bergenstråhle Group AB
P.O. Box 17704
118 93 Stockholm (SE)**

(54) **METHOD AND APPARATUS FOR IN-VEHICLE ECU COMMUNICATION**

(57) A method and computer program performed by a system and a system (60) for communication between electronic control units (ECU's) in an in-vehicle communications network (50), the method comprising determining (S100) data for transmission from a first electronic control unit (100), encoding (S110) data by means of an encoding unit (120), the encoding unit (120) comprised in the first electronic control unit (100), interleaving (S120) the encoded data by means of an interleaving unit (130), the interleaving unit comprised in the first electronic control unit (100), transmitting (S130) the interleaved encoded data by means of a transmission interface (140), the transmission interface (140) comprised in the first electronic control unit (100), receiving (S140) the interleaved encoded data by means of a reception interface (150), the reception interface (150) comprised in a second electronic control unit (110), de-interleaving (S150) the interleaved encoded data by means of a de-interleaving unit (160), the de-interleaving unit (160) comprised in the second electronic control unit (110), decoding (S160) the encoded data by means of a decoding unit (170), the decoding unit (170) comprised by the second electronic control unit (110), providing (S170) the data at the disposition of the second electronic control unit (110).

Fig. 1

EP 3 407 517 A1

**Description**

TECHNICAL FIELD

The present disclosure relates generally to a method, apparatus and computer program for in-vehicle communication between electronic control units (ECU).

BACKGROUND

Today's vehicles, such as cars, are complex technical platforms. The vehicles contain a constantly growing number of electronic control units (ECU's). Some of the electronic control units are associated with different kind of sensors, actuators and systems. Some of the electronic control units are related to the vehicles comfort, some of the electronic control units are related to the vehicles infotainment system, some of the electronic control units are related to the engine and propulsion of the vehicle, some of the electronic control units are related to the safety for the driver, passengers, surrounding vehicles or pedestrians. This is exemplifying some of the electronic control units that is used in today's vehicles.

An increasing amount of data is being created in a vehicle today. The data may be generated for example by video cameras, infrared cameras, radars, just to mention a few examples.

The increasing number of electronic control units generate a growing amount of data. Further, in some of the applications, the communication and the execution of data is expected to be in a rapid manner or real time. Furthermore, requirements are also set out in terms of achieving and assessing functional safety.

A problem today is that communications networks in vehicles have a limited capacity in the amount of data that may be transmitted between a transmitting electronic control unit and receiving electronic control unit. The electronic control units may further have limited computing resources, which may cause relatively slow processing of data in both the transmitting electronic control unit as well as the receiving electronic control unit. This in turn causes delays in any corrective actions if or when a fault in the data is detected.

Yet another problem is the fact that the increasing number of sensors generate more data which may create congestion in the vehicle communications network, and some of the data may be critical for the vehicle safety.

SUMMARY

It is an object of the invention to address at least some of the problems and issues outlined above. It is possible to achieve these objects and others by using a method and an apparatus as defined in the attached independent claims.

According to one aspect, a method is provided performed by a system for communication between electronic control units (ECU's) in an in-vehicle communications network. The method comprises determining data for transmission from a first electronic control unit. The method comprises encoding data by means of an encoding unit, the encoding unit comprised in the first electronic control unit. The method comprises interleaving the encoded data by means of an interleaving unit, the interleaving unit comprised in the first electronic control unit. The method comprises transmitting the interleaved encoded data by means of a transmission interface, the transmission interface comprised in the first electronic control unit. The method comprises receiving the interleaved encoded data by means of a reception interface, the reception interface comprised in a second electronic control unit. The method comprises de-interleaving the interleaved encoded data by means of a de-interleaving unit, the de-interleaving unit comprised in the second electronic control unit. The method comprises decoding the encoded data by means of a decoding unit, the decoding unit comprised by the second electronic control unit. The method comprises providing the data at the disposition of the second electronic control unit.

Within the context of the invention the term 'disposition' will be understood by the person skilled in the art as relating to that electronic control units in an in-vehicle communications network may use provided data to control actuators, such as brakes, injectors, etc., or refine ECU-collected sensor data by aggregating with the provided data from another ECU, or display the provided data, or write the provided data to a memory, etc. as is established in the field of electronic control units for vehicles.

The method may enable a more robust fault-tolerance because encoding may allow error detection and error correction suitable for a range of bandwidths and computing resources. Furthermore, the inventor has realized that in a vehicle context an interference may often occur during transmission and cause a burst of multiple erroneous data bits, which in burst form may prove too much for a method comprising encoding and decoding which is suitable for vehicular ECUs and communication busses. By further comprising interleaving and de-interleaving data in connection to the vehicular communication interface the method may improve the fault-tolerance by reducing the risk of having a burst of errors in the same data frame. Consequently, this method may allow an encoding method and corresponding decoding method suitable for vehicle ECUs in terms of processing and/or memory resources.

According to another aspect, a method is provided performed by a first electronic control unit for communication between electronic control units (ECU's) in an in-vehicle communications network. The method comprises determining data for transmission from the first electronic control unit. The method comprises encoding data by means of an encoding unit. The method comprises interleaving the encoded data by means of an interleaving unit. The method comprises transmitting the interleaved encoded data by means of a transmission interface.

According to another aspect, a method is provided performed by a second electronic control unit for communication between electronic control units (ECU's) in an in-vehicle communications network. The method comprises receiving interleaved encoded data by means of a reception interface. The method comprises de-interleaving the interleaved encoded data by means of a de-interleaving unit. The method comprises decoding the encoded data by means of a decoding unit. The method comprises providing the data at the disposition of the second electronic control unit.

According to another aspect, a system is provided for communication between electronic control units (ECU's) in an in-vehicle communications network, the system comprising at least one processor and at least one memory, said memory containing instructions executable by said processor. The system is operative to determine data for transmission from a first electronic control unit. The system is operative to encode data by means of an encoding unit, the encoding unit comprised in the first electronic control unit. The system is operative to interleave the encoded data by means of an interleaving unit, the interleaving unit comprised in the first electronic control unit. The system is operative to transmit the interleaved encoded data by means of a transmission interface, the transmission interface comprised in the first electronic control unit. The system is operative to receive the interleaved encoded data by means of a reception interface, the reception interface comprised in a second electronic control unit. The system is operative to de-interleave the interleaved encoded data by means of a de-interleaving unit, the de-interleaving unit comprised in the second electronic control unit. The system is operative to decode the encoded data by means of a decoding unit, the decoding unit comprised by the second electronic control unit. The system is operative to provide the data at the disposition of the second electronic control unit.

According to another aspect, a first electronic control unit is provided for communication between electronic control units (ECU's) in an in-vehicle communications network. The first electronic control unit 100 comprising at least one processor and at least one memory, said memory containing instructions executable by said processor. The first electronic control unit is operative to determine data for transmission from the first electronic control unit. The first electronic control unit is operative to encode data by means of an encoding unit. The first electronic control unit is operative to interleave the encoded data by means of an interleaving unit. The first electronic control unit is operative to transmit the interleaved encoded data by means of a transmission interface.

According to another aspect, a second electronic control unit is provided for communication between electronic control units (ECU's) in an in-vehicle communications network, the second electronic control unit comprising at least one processor and at least one memory, said memory containing instructions executable by said processor. The second electronic control unit is operative to receive interleaved encoded data by means of a reception interface. The second electronic control unit is operative to de-interleave the interleaved encoded data by means of a de-interleaving unit. The second electronic control unit is operative to decode the encoded data by means of a decoding unit. The second electronic control unit is operative to provide the data at the disposition of the second electronic control unit.

According to another aspect, a computer program comprising computer readable code means is provided which, when run in a system for communication between electronic control units (ECU's) in an in-vehicle communications network, causes the system to perform the method of determining data for transmission from a first electronic control unit. The computer program causes the system to perform the method of encoding data by means of an encoding unit, the encoding unit comprised in the first electronic control unit. The computer program causes the system to perform the method of interleaving the encoded data by means of an interleaving unit, the interleaving unit comprised in the first electronic control unit. The computer program causes the system to perform the method of transmitting the interleaved encoded data by means of a transmission interface, the transmission interface comprised in the first electronic control unit. The computer program causes the system to perform the method of receiving the interleaved encoded data by means of a reception interface, the reception interface comprised in a second electronic control unit. The computer program causes the system to perform the method of de-interleaving the interleaved encoded data by means of a de-interleaving unit, the de-interleaving unit comprised in the second electronic control unit. The computer program causes the system to perform the method of decoding the encoded data by means of a decoding unit, the decoding unit comprised by the second electronic control unit. The computer program causes the system to perform the method of providing the data at the disposition of the second electronic control unit.

The above method and apparatus may be configured and implemented according to different optional embodiments. One possible embodiment may comprise determining whether the de-interleaved encoded data are correct. One possible embodiment may comprise determining whether the de-interleaved encoded data contain errors. One possible embodiment may comprise correcting the de-interleaved encoded data containing errors. One possible embodiment may comprise determining whether the de-interleaved encoded data contains non-correctable errors, whereby a NAK (Negative Acknowledgement) message is transmitted from the second electronic control unit to the first electronic control unit.

One possible embodiment may comprise the encoding of data is performed according to a BCH code method. One possible embodiment may comprise the decoding of data is performed according to a BCH code method. One possible embodiment may comprise the de -interleaved encoded data transmitted between the first electronic control unit and the second electronic control unit is carried on any of: FlexRay Automotive Communication Bus (FlexRay), Time-Triggered Protocol, or Controller Area Network (CAN-bus), or Ethernet.

Further possible features and benefits of this solution will become apparent from the detailed description below.

BRIEF DESCRIPTION OF DRAWINGS

The solution will now be described in more detail by means of exemplary embodiments and with reference to the accompanying drawings, in which:

Fig. 1 is a block diagram illustrating an overview of the solution.

Fig. 2 is a flow chart illustrating a procedure performed by the system.

Fig. 3 illustrates some further embodiments of the solution.

Fig. 4 illustrates yet some further embodiments of the solution.

Fig. 5 is a flow chart illustrating some further embodiments of the procedure performed by the system.

Fig. 6 is a flow chart illustrating a procedure performed by a first electronic unit.

Fig. 7 is a flow chart illustrating a procedure performed by a second electronic unit.

Fig. 8 is a flow chart illustrating some further embodiments of the procedure performed by the second electronic unit.

Fig. 9 is a block diagram illustrating a system in more detail, according to further possible embodiments.

Fig. 10 is a block diagram illustrating a first electronic control unit in more detail, according to further possible embodiments.

Fig. 11 is a block diagram illustrating a second electronic control unit in more detail, according to further possible embodiments.

DETAILED DESCRIPTION

Briefly described, a solution is provided to enable robust communication in a vehicle such as a car, truck, bus or similar type of vehicle for transportation of passengers or goods on road. The solution enables communication between electronic control units, such that retransmissions of data may be avoided. By coding data and splitting the coded data through interleaving when transmitting data between electronic control units, it may be possible to correct data at a receiving side and thereby avoid costly retransmission of data. Furthermore, the solution may allow more resource efficient encoding and decoding methods to be chosen while maintaining a robust fault-tolerance that vehicular systems may require.

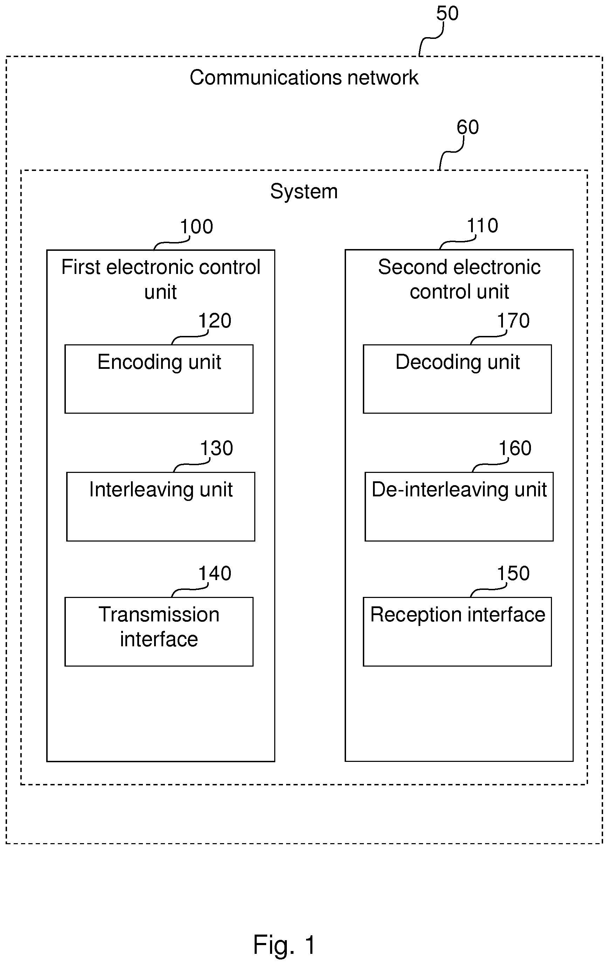

Fig. 1 shows a non-limiting overview of the solution, with a communications network 50 for communication in a vehicle, or between a vehicle and other vehicles or nodes in the communications network 50. Further, a system 60 is shown, illustrating an exemplary embodiment of the solution. The system 60 includes a first electronic control unit 100, comprising an encoding unit 120 for encoding data, an interleaving unit 130 for interleaving data, and a transmission interface 140 for transmission of data. The figure further shows a second electronic control unit 110, comprising a reception unit 150 for reception of data, a de-interleaving unit 160 for de-interleaving of data, and a decoding unit 170 for decoding of data.

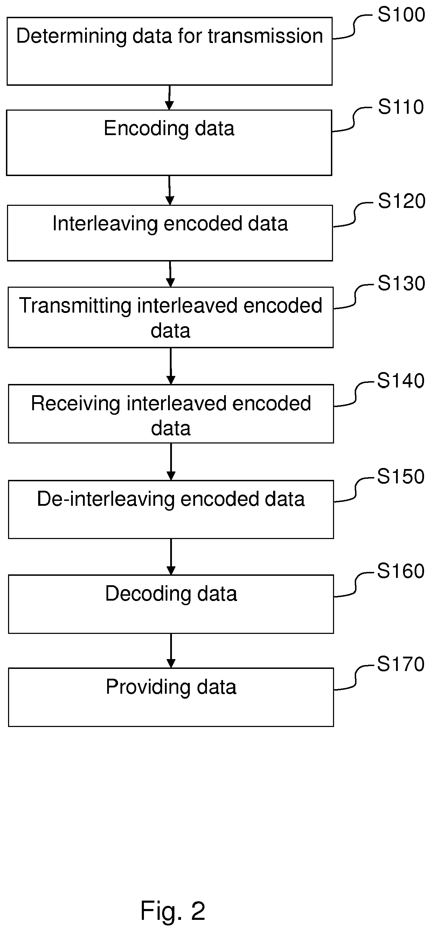

Fig. 2 shows an embodiment of the solution, by the illustrated flowchart. Here, a method that may be suitable for a system and/or network as exemplified in Fig. 1 is provided. The method performed by a system 60 for communication between electronic control units 100, 110 (ECU's) in an in-vehicle communications network 50. The method comprises determining **S100** data for transmission from a first electronic control unit 100. The method comprises encoding **S110** data by means of an encoding unit 120, the encoding unit 120 comprised in the first electronic control unit 100. The method comprises interleaving **S120** the encoded data by means of an interleaving unit 130, the interleaving unit comprised in the first electronic control unit 100. The method comprises transmitting **S130** the interleaved encoded data by means of a transmission interface 140, the transmission interface 140 comprised in the first electronic control unit 100. The method comprises receiving **S140** the interleaved encoded data by means of a reception interface 150, the reception interface 150 comprised in a second electronic control unit 110. The method comprises de-interleaving **S150** the encoded data by means of a de-interleaving unit 160, the de-interleaving unit 160 comprised in the second electronic control unit 110. The method comprises decoding **S160** the data by means of a decoding unit 170, the decoding unit 170 comprised by the second electronic control unit 110. The method comprises providing **S170** the data at the disposition of the second electronic control unit 110.

In the solution provided by this disclosure, the communications network 50 is for example based on FlexRay Automotive Communication Bus (FlexRay), Time-Triggered Protocol, or Controller Area Network (CAN-bus). The communication may also be based on Ethernet, according to IEEE 802.3, etc., or WiFi, according to 802.11, etc., Bluetooth, TCP/IP (Transfer Control Protocol / Internet Protocol) not limiting to other suitable formats. These are non-limiting examples, and combinations of the mentioned examples are possible or other suitable formats, known by the person skilled in the art.

The first electronic control unit 100 and the second electronic control unit 110 may also be described under the term ECU. An electronic control unit 100 and 110 may be an embedded system with a general purpose in a vehicle, or an embed system with a specific purpose in a vehicle. Non limiting examples of electronic control units 100 and 110 is: Electronic/engine Control Module (ECM), Transmission Control Module (TCM), Brake Control Module (BCM or EBCM), Central Control Module (CCM), Central Timing Module (CTM), General Electronic Module (GEM), Body Control Module (BCM), Suspension Control Module (SCM), control unit, or control module, Door control unit (DCU), Engine control unit, Electric Power Steering Control Unit (PSCU), Human-machine interface (HMI), Powertrain control module (PCM): wherein sometimes the functions of the Engine Control Unit and transmission control unit (TCU) are combined into a single unit called the Powertrain Control Module. Further non-exhaustive examples include Seat Control Unit, Speed control unit (SCU), Telematic control unit (TCU), Transmission control unit (TCU), Brake Control Module (BCM; ABS or ESC), Battery management system. Additionally, ECUs may be embedded in sensors such as forward looking camera, scanning and/or static Lidar, Radar, etc.

The data determined for transmission may be sensor data, parameters, instructions, error codes, infotainment media, brake request, Gear number, Clutch status, not limiting to other types of data necessary or suitable for transmission between a first electronic unit 100 and a second electronic unit 110.

The encoding unit 120 encodes data by processing data into encoded data. The encoding is performed according to a determined encoding method. An example of such determined encoding method is BCH encoding. BCH encoding is further described later in this disclosure. The determined encoding method used for encoding data may be individually determined for each specific embodiment.

In an optional embodiment, the encoding unit 120 is encoding data by processing frames with data into encoded frames with data. Non-limiting examples of frames with data, is frames comprising a header and a body, or other suitable formats know by the person skilled in the art; All or some frames may for example adhere to communication standards established by vehicle manufacturers, suppliers, government-, standards bodies, etc.

The interleaving unit 130 interleaves data by processing encoded data into encoded and interleaved data. The interleaving is performed according to a determined interleaving method. Other terms for interleaving is "sector interleave", or "arranging data in a noncontiguous manner". Frames of data may also be denoted data frames, data containers, block codes and code words, not limiting to other similar terms.

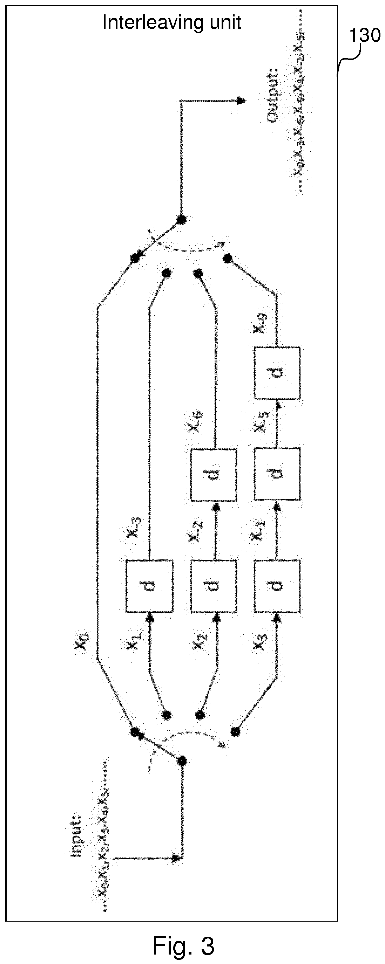

Fig. 3 illustrates a non-limiting example of interleaving. In this scenario, the encoded data is distributed into frames as $X_0$, $X_1$, $X_2$, $X_3$, $X_4$, $X_5$, etc. containing the data. The frames containing the data $X_0$, $X_1$, $X_2$, $X_3$, $X_4$, $X_5$, etc. may be provided to the interleaving unit 130. The interleaving unit 130 processes the frames containing the data, such that in this example $X_0$, $X_1$, $X_2$, $X_3$, $X_4$, $X_5$, are divided by a time "d" such that the data frames that are outputted by the interleaving unit 130 may be described as $X_0$, $X_{-3}$, $X_{-6}$, $X_{-9}$, $X_{-2}$, $X_{-5}$, etc., in this example as illustrated by Fig. 3.

The transmission interface 140, shown in Fig. 1, may transmit the encoded and interleaved data from the first electronic control unit 100 and provide the data onto the communications network 50.

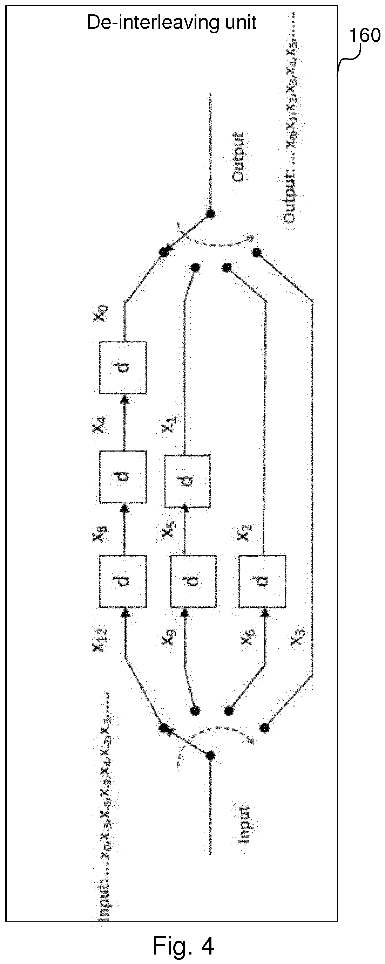

Fig. 4 illustrates a non-limiting example of the de-interleaving unit 160. The de-interleaving unit 160 may be provided with the data from the reception interface 150, which has obtained the data from the communications network 50. In this example the de-interleaving unit 160 has received input of frames of data as $X_0$, $X_{-3}$, $X_{-6}$, $X_{-9}$, $X_{-2}$, $X_{-5}$, etc. The de-interleaving unit 160 processes the $X_0$, $X_{-3}$, $X_{-6}$, $X_{-9}$, $X_{-2}$, $X_{-5}$, etc., such that the original $X_0$, $X_1$, $X_2$, $X_3$, $X_4$, $X_5$ are re-created. An advantage is that if individual frames of data or a few frames in line, are lost or determined to be inaccurate, the data may be later corrected or recreated. Furthermore, individual frames of data or a few frames in sequential line while interleaved may form a different sequence while de-interleaved, possibly reducing the risk of higher number of bits being erroneous in each frame

A non-limiting example of how this could be used in a scenario where errors has occurred. The frames X0, X1, X2, X3, X4, X5, X6, X7, X8, X9, may be arranged into the following:

```
Row1: X0   X1    2     (+ BCH1)
Row2: X3   X4    X5    (+ BCH2)
Row3: X6   X7    X8    (+ BCH3)
Row4: X9   X10   X11   (+ BCH4)
```

Where data is read by column: X0, X3, X6, X9, and $X_1$, X4, X7, X10, X11, ... If an error occurs and disrupt some data bits in X0, X3, X6, X9, and EE, EE, EE, XEE, X11, in this illustrating example the frames after de-interleaving looks like:

```
Row1:X0   EE   X2    (+ BCH1)
Row2:X3   EE   X5    (+ BCH2)
Row3:X6   EE   X8    (+ BCH3)
Row4:X9   EE   X11   (+ BCH4)
```

If it for example is determined to have capacity to correct up to three errors with the BCH coding, it becomes possible because the four bit errors are located in different frames, where it is possible to correct or recreate the frames 1, ..., 4.

Various embodiments described in this disclosure may be optionally used individually or combined together. The person skilled in the art may utilize or adopt a suitable combination of embodiments for the desired preferred effect.

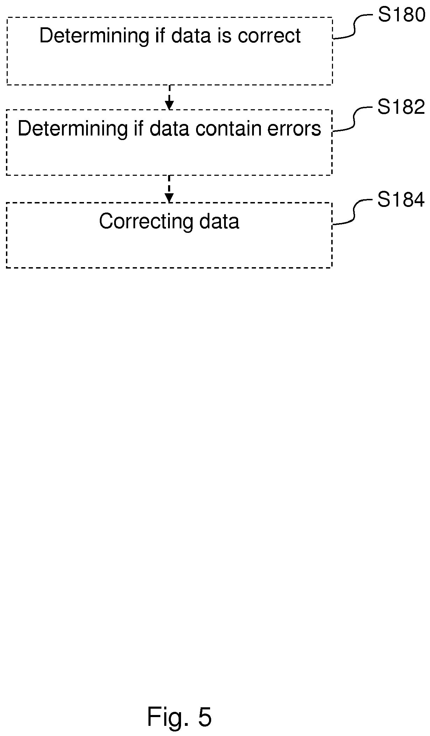

Fig. 5 illustrates optional embodiments of the solution. In an embodiment, the method comprises determining **S180** whether the de-interleaved encoded data are correct.

In an embodiment, the method comprises determining **S182** whether the de-interleaved encoded data contain errors. Even if it may be concluded that if the de-interleaved encoded data contains errors, when it not is determined correct, it is more secure, if it is determined that the de-interleaved encoded data contains errors.

In an embodiment, the method comprises correcting **S184** the de-interleaved encoded data containing errors. A resulting action may be to correct the de-interleaved encoded data, when it has been determined to contain errors.

In an embodiment, the method comprises determining S186 whether the de-interleaved encoded data contains non-correctable errors, whereby a NAK (Negative Acknowledgement) message is transmitted from the second electronic control unit 110 to the first electronic control unit 100. When the de-interleaved encoded data is determined to contain errors and the errors are of such nature that the errors cannot be corrected, or the errors are not worth to be corrected, an option is to initiate retransmission of the de-interleaved encoded data, by a NAK-message.

In an embodiment, the encoding of data is performed according to any of: BCH code method, AN codes, Berger code, Constant-weight code, Convolutional code, Expander codes, Group codes, Golay codes. These are non-limiting examples of encoding methods which may be used in the solution described in this disclosure. When a determined encoding method is used, a matching or compatible decoding method is used when decoding.

A non-limiting example of encoding may be according to the following example, illustrating encoding using the BCH-method, which may be used in the example embodiment shown in fig 2:

BCH encoding of data

To encode data, for example a block of information bits $f(X)$ a generator polynomial $g(X)$ is used to divide the information block $f(X)$ to form a quotient q($X$) and a rest $v(X)$. The relation is shown in (1-1)

$$X^{n-k}f(X) = q(X)g(X) + v(X) \qquad (1\text{-}1)$$

The quotient $q(X)$ is not used and therefore is discarded. Now the code word that shall be transmitted is given by

$$c(X) = X^{n-k}f(X) + v(X) \qquad (1\text{-}2)$$

where degv($X$) < deg $g(X)$, $n$ is the block size and $v(X)$ appends to the tail in a systematic manner. The method is similar as in traditional CRC encoding.

In an embodiment, the decoding of data is performed according to any of: BCH code method, AN codes, Berger code, Constant-weight code, Convolutional code, Expander codes, Group codes, Golay codes. These are non-limiting examples of encoding methods which may be used in the solution described in this disclosure. When a specific encoding method is used, a matching decoding method is used when decoding.

A non-limiting example of is decoding may be according to the following example, illustrating decoding using the BCH-method, which may be used in the example embodiment shown in fig 2:

BCH decoding of data

Decoding involves three steps:

Compute the syndrome from the received code word.

Find the error location polynomial from a set of equations derived from the syndrome.

Use the error location polynomial to identify errant bits and correct them.

With the BCH codes, to implement error correction there is a need to compute several components, which together comprise a syndrome vector.

By substituting roots of $g(X)$ (= $\alpha^j$) into $r(X)$ gives $2t$ equations.

At a receiver side, such as the second electronic unit 110, we receive:

$$r(X) = r_0 + r_1 X + r_2 X^2 + \cdots + r_{n-1} X^{n-1},$$
$$= c(X) + e(X),$$
$$= \sum_{i=0}^{n-1} r_i X^i. \tag{2-1}$$

where $c(X)$ is the message that was send by the first electronic unit 100, the transmitting side, $e(X)$ are the errors occurred in the received message $r(X)$ and $n$ is the number of bits. Suppose that $\alpha^j$ is the $j$-th root of $c(X)$. Now, $c(\alpha^j)=0$ for $j = 1, 2, ..., 2t$.

The syndrome components that shall be used are given by:

$$\begin{cases} S_1(X) & = & m_1(X) \mid r(X) \\ S_2(X) & = & m_2(X) \mid r(X) \\ \vdots & & \vdots \\ S_{2t}(X) & = & m_{2t}(X) \mid r(X) \end{cases}, \tag{2-2}$$

or in matrix form:

$$\begin{bmatrix} S_1(X) \\ S_2(X) \\ \vdots \\ S_{2r}(X) \end{bmatrix} = \begin{bmatrix} m_1(X) \\ m_2(X) \\ \vdots \\ m_{2r}(X) \end{bmatrix} \mid \begin{bmatrix} r(X) & r(X) & \cdots & r(X) \end{bmatrix}$$

where $a \mid b$ stand for $a$ divides $b$. The $m_j(x)$ for $j = 1, 2,..., 2t$ are the minimal polynomials from the generator polynomial

$$g(X) = \xi\{m_1(X), m_2(X), ..., m_{2t}(X)\} \tag{2-3}$$

where $\xi\{\cdot\}$ stand for least common multiplier. Compute the syndrome

$$\begin{aligned} S_j &= \underbrace{c(\alpha^j)}_{=0} + e(\alpha^j), \\ &= e(\alpha^j), \\ &= e_0 + e_1\alpha^j + e_2\alpha^{2j} + \cdots + e_{n-1}\alpha^{(n-1)j}. \end{aligned} \tag{2-4}$$

where $e_i \in \{0,1\}$. Suppose now that errors occurred at locations $i_1, i_2, ..., i_l, ..., i_\eta, \eta \le t$. Now consider the error

$$e_{il} = \begin{cases} 1, & l = 1, 2, ..., \eta \le t \\ 0, & otherwise \end{cases}, \tag{2-5}$$

then

$$\begin{aligned} S_j &= e(\alpha^j), \\ &= 1 + \alpha^j + \alpha^{2j} + \cdots + \alpha^{(n-1)j}. \end{aligned} \tag{2-6}$$

We call $i_1, i_2, ..., i_l, ..., i_n$ the error locators. Express the syndrome

$$S_j = \sum_{l=1}^{\eta} \alpha^{i_l}, \quad j = 1, 2, ..., 2t, \tag{2-7}$$

and expanding (2-7) gives the following systems of equations

$$\begin{cases} S_1 &= a^{i_1} + a^{i_2} + ... + a^{i_\eta} \\ S_2 &= \left(a^{i_1}\right)^2 + \left(a^{i_2}\right)^2 + ... + \left(a^{i_\eta}\right)^2 \\ \vdots & \vdots \qquad\qquad\qquad \vdots \\ S_{2t} &= \left(a^{i_1}\right)^{2t} + \left(a^{i_2}\right)^{2t} + ... + \left(a^{i_\eta}\right)^{2t} \end{cases}. \tag{2-8}$$

In an embodiment, the interleaved encoded data transmitted between the first electronic control unit and the second electronic control unit is carried on any of: FlexRay Automotive Communication Bus (FlexRay), Time-Triggered Protocol, or Controller Area Network (CAN-bus), or Ethernet according to IEEE 802.3, etc. Other non-limiting examples of carriers are, or WiFi, according to 802.11, Bluetooth, TCP/IP (Transfer Control Protocol / Internet Protocol).

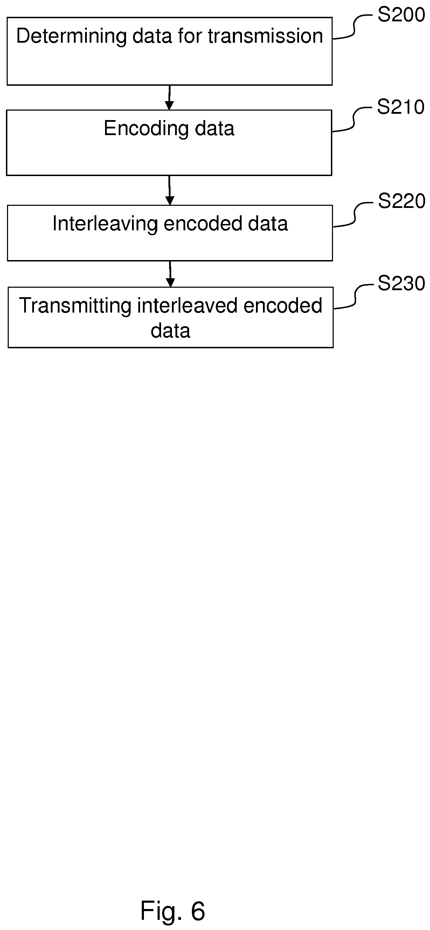

Fig. 6 illustrates an embodiment of the solution. A method performed by the first electronic control unit 100, is provided for communication between electronic control units (ECU's) in an in-vehicle communications network 50. The method comprises determining **S200** data for transmission from the first electronic control unit 100. The method comprises encoding **S210** data by means of an encoding unit 120. The method comprises interleaving **S220** the encoded data by means of an interleaving unit 130. The method comprises transmitting **S230** the interleaved encoded data by means of a transmission interface 140.

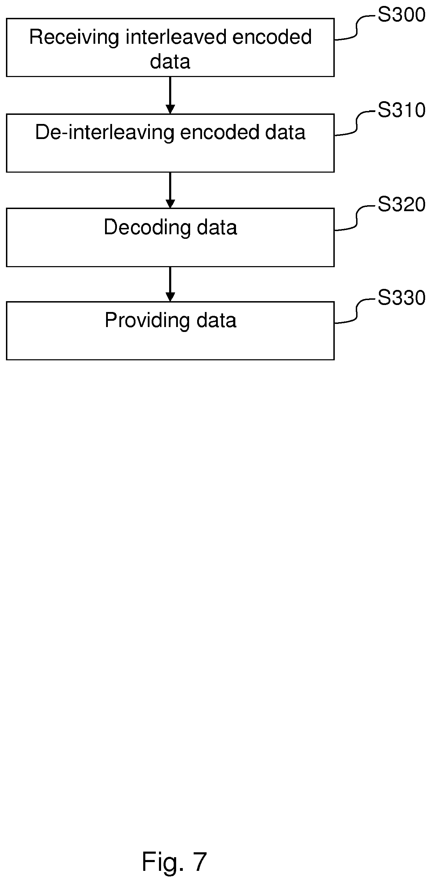

Fig. 7 illustrates an embodiment of the solution. A method performed by the second electronic control unit 110, is provided for communication between electronic control units (ECU's) in an in-vehicle communications network 50. The method comprises receiving **S300** interleaved encoded data by means of a reception interface 150. The method comprises de-interleaving **S310** the encoded data by means of a de-interleaving unit 160. The method comprises decoding **S320** the data by means of a decoding unit 170. The method comprises providing **S330** the data at the disposition of the second electronic control unit 110.

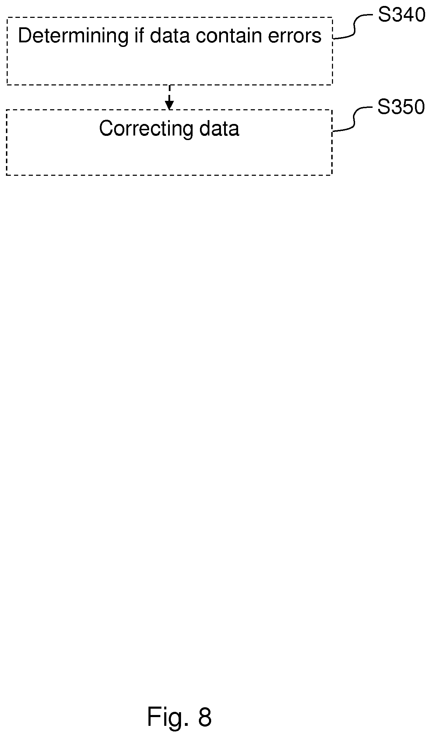

Fig. 8 illustrates optional embodiment of the solution. In an embodiment of the solution, the method comprises determining **S340** whether the de-interleaved encoded data contain errors. When the de-interleaved encoded data contains errors, the method further comprises correcting **S350** the de-interleaved encoded data containing errors.

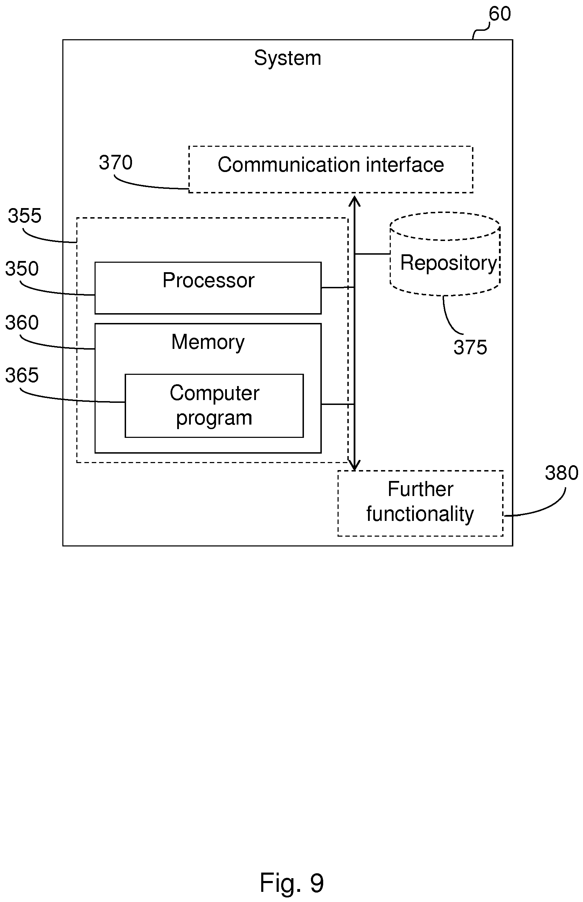

Fig. 9 shows a block diagram of an embodiment of the solution. The system 60 for communication between electronic control units (ECU's) in an in-vehicle communications network 50 is provided, which system 60 and communication network 50 may further schematically be arranged as illustrated in Fig. 1 for the sake of a non-limiting reference. The system 60 comprising at least one processor 350 and at least one memory 360, where the memory containing instructions executable by said processor. The system 60 is operative to determine data for transmission from a first electronic control unit 100. The system 60 is operative to encode data by means of an encoding unit 120, the encoding unit 120 comprised in the first electronic control unit 100. The system 60 is operative to interleave the encoded data by means of an interleaving unit 130, the interleaving unit comprised in the first electronic control unit 100. The system 60 is operative to transmit the interleaved encoded data by means of a transmission interface 140, the transmission interface 140 comprised in the first electronic control unit 100. The system 60 is operative to receive the interleaved encoded data by means of a reception interface 150, the reception interface 150 comprised in a second electronic control unit 110. The system 60 is operative to de-interleave the encoded data by means of a de-interleaving unit 160, the de-interleaving unit 160 comprised in the second electronic control unit 110. The system 60 is operative to decode the data by means of a decoding unit 170, the decoding unit 170 comprised in the second electronic control unit 110. The system 60 is operative to provide the data at the disposition of the second electronic control unit 110.

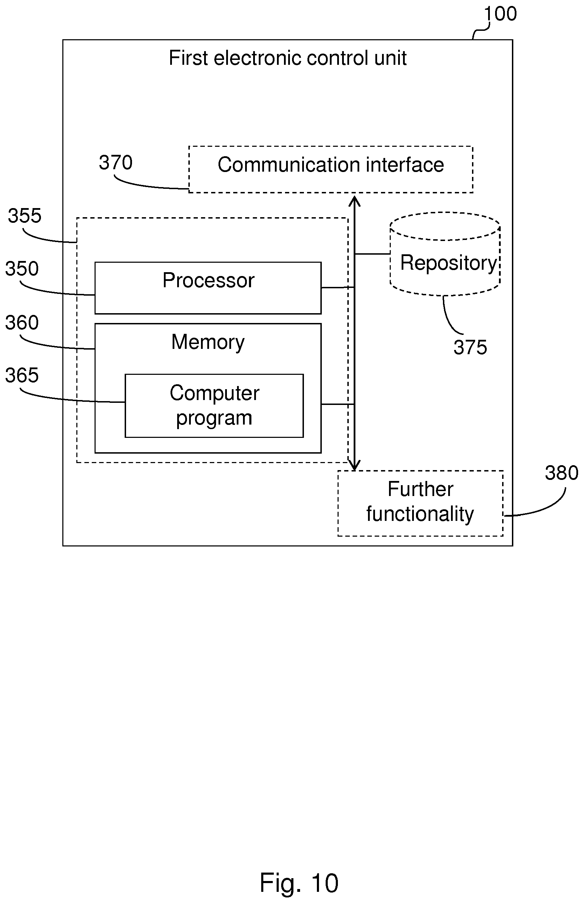

Fig. 10 shows another block diagram of the solution. In an embodiment of the solution, a first electronic control unit 100 for communication between electronic control units (ECU's) in an in-vehicle communications network 50 is provided. The first electronic control unit 100 comprising at least one processor 350 and at least one memory 360, said memory containing instructions executable by said processor. The first electronic control unit 100 is operative to determine data for transmission from the first electronic control unit 100. The first electronic control unit 100 is operative to encode data by means of an encoding unit 120. The first electronic control unit 100 is operative to interleave the encoded data by means of an interleaving unit 130. The first electronic control unit 100 is operative to transmit the interleaved encoded data by means of a transmission interface 140.

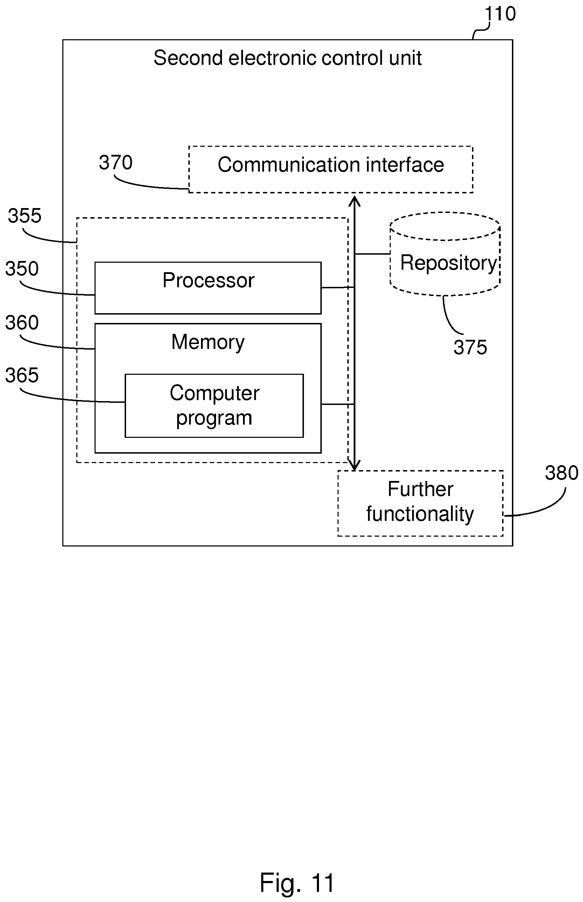

Fig. 11 shows yet another block diagram of the solution. In an embodiment of the solution, a second electronic control unit 110 for communication between electronic control units (ECU's) in an in-vehicle communications network 50 is provided. The second electronic control unit 110 comprising at least one processor 350 and at least one memory 360, said memory containing instructions executable by said processor. The second electronic control unit 110 is operative to receive interleaved encoded data by means of a reception interface 150. The second electronic control unit 110 is operative to de-interleave the encoded data by means of a de-interleaving unit 160. The second electronic control unit 110 is operative to decode the data by means of a decoding unit 170. The second electronic control unit 110 is operative to provide the data at the disposition of the second electronic control unit 110.

With reference to Fig. 9 the system 60 may further comprise a communication interface 370, which may be considered to comprise conventional means for communicating from and/or to the other devices in the network, such as electronic control units (ECU's) or other devices or nodes in the communication network 50. The conventional communication means may include at least one transmitter and at least one receiver. The communication interface may further comprise one or more repository 375 and further functionality 380 useful for the system 60 to serve its purpose as system for communication between electronic control units (ECU's) in an in-vehicle communications network 50, such as power supply, internal communications bus, internal cooling, database engine, operating system, not limiting to other functionalities.

The instructions executable by said processor may be arranged as a computer program 365 stored in said at least one memory 360. The at least one processor 350 and the at least one memory 360 may be arranged in an arrangement 355. The arrangement 355 may alternatively be a microprocessor and adequate software and storage therefore, a Programmable Logic Device, PLD, or other electronic component(s)/processing circuit(s) configured to perform the actions, or methods, mentioned above.

The computer program 365 may comprise computer readable code means, which when run in the system 60 causes the system 60 to perform the steps described in any of the methods described in relation to Fig. 2 or Figs. 5-8. Analogously, with reference to Figs. 10 and 11 the computer program 365 may comprise computer readable code means, which when run in the first and/or second electronic control unit 100,110 causes the respective first and/or second electronic control unit 100,110 to perform the steps described in any of the methods described in relation to Fig. 2 or Figs. 5-8. The computer program may be carried by a computer readable storage medium connectable to the at least one processor. The computer readable storage medium may be the at least one memory 360. The at least one memory 360 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the at least one memory 360.

Although the instructions described in the embodiments disclosed above are implemented as a computer program 365 to be executed by the at least one processor 350 at least one of the instructions may in alternative embodiments be implemented at least partly as hardware circuits. Alternatively, the computer program may be stored on a server or any other entity connected to the communications network to which the system 60 has access via its communications interface 370. Analogously, with reference to Figs. 10 and 11 the computer program may be stored on a server or any other entity connected to the communications network to which the first and/or second electronic control unit 100,110 has access via its communications interface 370. The computer program may than be downloaded from the server into the at least one memory 360, carried by an electronic signal, optical signal, or radio signal.

While the solution has been described regarding specific exemplary embodiments, the description is generally only intended to illustrate the inventive concept and should not be taken as limiting the scope of the solution. For example, the terms "electronic control unit", "encoding", "interleaving" and "de-interleaving" have been used throughout this description, although any other corresponding nodes, devices, units, functions, and/or parameters could also be used having the features and characteristics described here. The solution is defined by the appended claims.

**Claims**

1. A method performed by a system (60) for communication between electronic control units (ECU's) in an in-vehicle communications network (50), the method comprising:

   - determining (S100) data for transmission from a first electronic control unit (100),
   - encoding (S110) data by means of an encoding unit (120), the encoding unit (120) comprised in the first electronic control unit (100),
   - interleaving (S120) the encoded data by means of an interleaving unit (130), the interleaving unit comprised in the first electronic control unit (100),
   - transmitting (S130) the interleaved encoded data by means of a transmission interface (140), the transmission interface (140) comprised in the first electronic control unit (100),
   - receiving (S140) the interleaved encoded data by means of a reception interface (150), the reception interface (150) comprised in a second electronic control unit (110),
   - de-interleaving (S150) the interleaved encoded data by means of a de-interleaving unit (160), the de-interleaving unit (160) comprised in the second electronic control unit (110),
   - decoding (S160) the encoded data by means of a decoding unit (170), the decoding unit (170) comprised by the second electronic control unit (110),
   - providing (S170) the data at the disposition of the second electronic control unit (110).

2. The method according to claim 1, comprising

   - determining (S180) whether the de-interleaved encoded data are correct.

3. The method according to any of claim 1 or 2, comprising

   - determining (S182) whether the de-interleaved encoded data contain errors.

4. The method according to claim 3, comprising

   - correcting (S184) the de-interleaved encoded data containing errors.

5. The method according to any of claims 1-4, comprising

- determining (S186) whether the de-interleaved encoded data contains non-correctable errors, whereby a NAK (Negative Acknowledgement) message is transmitted from the second electronic control unit (110) to the first electronic control unit (100).

6. The method according to any of claims 1-5, wherein

 - the encoding of data is performed according to a BCH code method,
 - the decoding of data is performed according to a BCH code method.

7. The method according to any of claims 1-6, wherein

 - the interleaved encoded data transmitted between the first electronic control unit and the second electronic control unit is carried on any of: FlexRay Automotive Communication Bus (FlexRay), Time-Triggered Protocol, or Controller Area Network (CAN-bus), or Ethernet.

8. A method performed by a first electronic control unit (100) for communication between electronic control units (ECU's) in an in-vehicle communications network (50), the method comprising:

 - determining (S200) data for transmission from the first electronic control unit (100),
 - encoding (S210) data by means of an encoding unit (120),
 - interleaving (S220) the encoded data by means of an interleaving unit (130),
 - transmitting (S230) the interleaved encoded data by means of a transmission interface (140).

9. A method performed by a second electronic control unit (110) for communication between electronic control units (ECU's) in an in-vehicle communications network (50), the method comprising:

 - receiving (S300) interleaved encoded data by means of a reception interface (150),
 - de-interleaving (S310) the interleaved encoded data by means of a de-interleaving unit (160),
 - decoding (S320) the encoded data by means of a decoding unit (170),
 - providing (S330) the data at the disposition of the second electronic control unit (110).

10. The method according to claim 9, comprising

 - determining (S340) whether the de-interleaved encoded data contain errors, wherein when the de-interleaved encoded data contains errors,
 - correcting (S350) the de-interleaved encoded data containing errors.

11. A system (60) for communication between electronic control units (ECU's) in an in-vehicle communications network (50), the system (60) comprising at least one processor (350) and at least one memory (360), said memory containing instructions executable by said processor, whereby the system (60) is operative to:

 - determine data for transmission from a first electronic control unit (100),
 - encode data by means of an encoding unit (120), the encoding unit (120) comprised in the first electronic control unit (100),
 - interleave the encoded data by means of an interleaving unit (130), the interleaving unit comprised in the first electronic control unit (100),
 - transmit the interleaved encoded data by means of a transmission interface (140), the transmission interface (140) comprised in the first electronic control unit (100),
 - receive the interleaved encoded data by means of a reception interface (150), the reception interface (150) comprised in a second electronic control unit (110),
 - de-interleave the interleaved encoded data by means of a de-interleaving unit (160), the de-interleaving unit (160) comprised in the second electronic control unit (110),
 - decode the encoded data by means of a decoding unit (170), the decoding unit (170) comprised in the second electronic control unit (110),
 - provide the data at the disposition of the second electronic control unit (110).

12. A first electronic control unit (100) for communication between electronic control units (ECU's) in an in-vehicle communications network (50), the first electronic control unit (100) comprising at least one processor (350) and at least one memory (360), said memory containing instructions executable by said processor, whereby the first electronic control unit (100) is operative to:

- determine data for transmission from the first electronic control unit (100),
- encode data by means of an encoding unit (120),
- interleave the encoded data by means of an interleaving unit (130),
- transmit the interleaved encoded data by means of a transmission interface (140).

13. A second electronic control unit (110) for communication between electronic control units (ECU's) in an in-vehicle communications network (50), the second electronic control unit (110) comprising at least one processor (350) and at least one memory (360), said memory containing instructions executable by said processor, whereby the second electronic control unit (110) is operative to:

- receive interleaved encoded data by means of a reception interface (150),
- de-interleave the interleaved encoded data by means of a de-interleaving unit (160),
- decode the encoded data by means of a decoding unit (170),
- provide the data at the disposition of the second electronic control unit (110).

14. A computer program (365) comprising computer readable code means, which when run in a system (60) causes the system (60) to perform the method according to any of the claims 1 - 7.

15. A computer readable storage medium comprising a computer program (365) according to claim 14.

50

**Communications network**

60

**System**

100

| First electronic control unit |
|---|
| 120 |
| Encoding unit |
| 130 |
| Interleaving unit |
| 140 |
| Transmission interface |

110

| Second electronic control unit |
|---|
| 170 |
| Decoding unit |
| 160 |
| De-interleaving unit |
| 150 |
| Reception interface |

Fig. 1

```
Determining data for transmission ─── S100

        │
        ▼

Encoding data ─── S110

        │
        ▼

Interleaving encoded data ─── S120

        │
        ▼

Transmitting interleaved encoded
data ─── S130

        │
        ▼

Receiving interleaved encoded
data ─── S140

        │
        ▼

De-interleaving encoded data ─── S150

        │
        ▼

Decoding data ─── S160

        │
        ▼

Providing data ─── S170
```

Fig. 2

Interleaving unit

Input:
... $x_0, x_1, x_2, x_3, x_4, x_5, \ldots$

$x_0$

$x_1$

$x_2$

$x_3$

$x_{-3}$

$x_{-2}$

$x_{-1}$

$x_{-6}$

$x_{-5}$

$x_{-9}$

Output:
... $x_0, x_{-3}, x_{-6}, x_{-9}, x_4, x_{-2}, x_{-5}, \ldots$

130

Fig. 3

Fig. 4

Determining if data is correct — S180

Determining if data contain errors — S182

Correcting data — S184

Fig. 5

Determining data for transmission ⟶ S200

Encoding data ⟶ S210

Interleaving encoded data ⟶ S220

Transmitting interleaved encoded data ⟶ S230

Fig. 6

Receiving interleaved encoded data — S300

De-interleaving encoded data — S310

Decoding data — S320

Providing data — S330

Fig. 7

S340

Determining if data contain errors

S350

Correcting data

Fig. 8

60

System

370    Communication interface

355

350    Processor

360    Memory

365    Computer
       program

Repository

375

380    Further
       functionality

Fig. 9

Fig. 10

110

Second electronic control unit

370    Communication interface

355

350    Processor

Repository

360    Memory

375

365    Computer
       program

Further
functionality    380

Fig. 11

Europäisches
Patentamt

European
Patent Office

Office européen
des brevets

# EUROPEAN SEARCH REPORT

Application Number

EP 17 17 2577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 054 627 A1 (KANG SUWON [KR]) 10 August 2016 (2016-08-10) * abstract * * page 1, paragraph 2 - paragraph 8 * * page 3, paragraph 17; figure 2 * * page 5, paragraph 27 - paragraph 32; figure 4 * * page 9, paragraph 60 - page 10, paragraph 70; figure 21 * | 1-15 | INV. H04L1/00 H04L1/18 H04L29/08 H04L12/40 |
| X | HUO YINJIA ET AL: "A survey of in-vehicle communications: Requirements, solutions and opportunities in IoT", 2015 IEEE 2ND WORLD FORUM ON INTERNET OF THINGS (WF-IOT), IEEE, 14 December 2015 (2015-12-14), pages 132-137, XP032854093, DOI: 10.1109/WF-IOT.2015.7389040 [retrieved on 2016-01-20] * page 1, "Abstract" and section I "Introduction" * * page 2, section III, left column * * section III.F bridging pages 3-4; figure 1 * | 1-15 | |

TECHNICAL FIELDS
SEARCHED    (IPC)

H04L

The present search report has been drawn up for all claims

| Place of search | Date of completion of the search | Examiner |
|---|---|---|
| Munich | 16 November 2017 | Courville, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 2577

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2017

| Patent document cited in search report | | Publication date | Patent family member(s) | | Publication date |
|---|---|---|---|---|---|
| EP 3054627 | A1 | 10-08-2016 | CN | 105594160 A | 18-05-2016 |
| | | | EP | 3054627 A1 | 10-08-2016 |
| | | | KR | 101476240 B1 | 24-12-2014 |
| | | | US | 2016241418 A1 | 18-08-2016 |
| | | | WO | 2015050375 A1 | 09-04-2015 |

EPO FORM P0459

For more details about this annex : see Official Journal of the European Patent Office, No. 12/82